# FASCICULE DE BREVET EUROPEEN

(11) **EP 3 679 408 B1**
(45) Date de publication et mention de la délivrance du brevet: **13.04.2022**
(21) Numéro de dépôt: 18759350.4
(22) Date de dépôt: 03.09.2018
(51) Int. Cl.: G01W 1/02, G01W 1/12, G01J 1/02, G01J 1/42

(54) **STATION MÉTÉOROLOGIQUE, INSTALLATION DE COMMANDE COMPRENANT UNE TELLE STATION ET MÉTHODE DE CONFIGURATION D'UNE TELLE STATION**
METEOROLOGISCHE STATION, STEUEREINRICHTUNG MIT EINER SOLCHEN STATION UND VERFAHREN ZUM KONFIGURIEREN EINER SOLCHEN STATION
METEOROLOGICAL STATION, CONTROL FACILITY COMPRISING SUCH A STATION AND METHOD FOR CONFIGURING SUCH A STATION

(30) Priorité: 04.09.2017 FR 1758147
(43) Date de publication de la demande: 15.07.2020
(73) Titulaire: Somfy Activites SA, 74300 Cluses (FR)
(72) Inventeur: CHERON, Eric, 74440 Taninges (FR)
(74) Mandataire: Lavoix
(86) Numéro de dépôt international: PCT/EP2018/073618
(87) Numéro de publication internationale: WO 2019/043225

(56) Documents cités:
- WO-A1-2015/049626
- JP-A- 2007 093 235
- US-A1- 2011 273 704
- US-A1- 2017 097 259

## Description

L'invention concerne le domaine du bâtiment et plus particulièrement des bâtiments à façades dites dynamiques, comportant des écrans motorisés de protection solaire, mobiles et ajustables, et des bâtiments dotés d'équipements électriques pour le confort et/ou la sécurité pilotables à distance.

Les façades dynamiques permettent d'assurer le confort lumineux dans le bâtiment et de réaliser des économies en énergie en régulant les flux énergétiques (apports thermiques et ventilation naturelle) à travers les ouvertures de la façade en combinaison avec le pilotage des équipements de chauffage, ventilation ou éclairage.

Les écrans peuvent être des stores d'intérieur, par exemple des stores vénitiens à lames orientables ou des stores enroulables, ou des écrans extérieurs, des panneaux rigides orientables, etc. Plusieurs écrans peuvent être situés au niveau d'une même ouverture.

Des actionneurs pilotent le fonctionnement des équipements électriques, par exemple le mouvement en rotation et/ou en translation des écrans mobiles équipant les ouvertures, ou les paramètres des équipements d'éclairage, chauffage ou ventilation. Ces actionneurs sont gérés de manière centrale au niveau de la pièce, de l'étage, de la façade à laquelle ils appartiennent ou simplement au niveau du bâtiment. Une unité de commande récupère également un certain nombre d'informations auprès de divers capteurs positionnés à l'intérieur et à l'extérieur du bâtiment, tels que capteurs de présence, de température, de luminosité, des dispositifs de mesure de temps, tels que des horloges, etc. En particulier, ces capteurs peuvent être positionnés en hauteur, par exemple sur le toit du bâtiment et, notamment, associés à un mât.

Chaque actionneur peut également être piloté individuellement ou dans un groupe par l'intermédiaire d'un point de commande local ou télécommande locale. En particulier, des zones de contrôle sur une même façade peuvent être définies. Sur l'ensemble de chaque zone, les actionneurs seront contrôlés simultanément par l'unité de commande centrale. Une zone peut également correspondre à la totalité d'une façade ou même du bâtiment.

Il existe un besoin de contrôle plus fin, notamment fenêtre par fenêtre ou équipement par équipement, pour tenir compte de conditions locales, par exemple les ombres portées sur le bâtiment, par une autre partie du bâtiment ou par des éléments environnants, comme d'autres bâtiments ou des reliefs géographiques, ou la circulation du vent et de la pluie autour du bâtiment, et de son environnement. Un seul ensemble de capteurs peut suffire par façade, pour indiquer notamment les conditions d'ensoleillement ainsi que la direction du rayonnement solaire.

Une station météorologique, comprenant une pluralité de capteurs est par exemple connue du document JP-A-2015210132. Cette station météorologique s'installe en haut d'un mât, par exemple pour être installée sur un terrain. Une station de capteurs similaire peut également être installée sur le toit d'un bâtiment. La présence de différents capteurs au niveau de la station météorologique permet de limiter le nombre de capteurs répartis sur le bâtiment et, donc, le coût global, ainsi que de faciliter leur maintenance.

Un capteur multiple est par ailleurs connu de US-A-2017/097259 et comprend uniquement des capteurs de lumière.

On connait également de la demande internationale WO-A-2015049626 une station de capteurs intégrant plusieurs éléments photosensibles, tels que des photodiodes, disposés dans un même boîtier, de sorte à distinguer la partie diffuse et la partie directe dans un rayonnement lumineux, concernant l'éclairement (illuminance) ou l'irradiation (irradiance). La demande internationale WO-A-2015049626 décrit ainsi un boîtier de capteurs, qui peut mesurer le rayonnement global selon quatre directions perpendiculaires, suivant quatre faces du boîtier. Le boîtier est positionné sur une façade, de sorte à détecter la même quantité de rayonnement solaire que les ouvertures situées sur cette façade. Différents calculs permettent de déterminer, à partir des valeurs obtenues selon les différentes directions et à partir de paramètres tels que l'azimut et l'élévation solaire, les composantes directes et diffuses du rayonnement solaire.

Toutefois, les stations météorologiques connues ne permettent pas d'apporter plus de précision par façade.

L'invention vise donc à apporter une solution plus simple que les solutions existantes, tout en fournissant une précision importante relative au rayonnement solaire concernant chaque façade. D'autre part, l'invention permet à la station météorologique de rester compatible avec les installations existantes.

A cet effet, l'invention concerne une station météorologique destinée à être installée sur le toit d'un bâtiment, ce bâtiment comprenant une installation de commande automatisée des conditions de confort et/ou de sécurité dans le bâtiment, la station comprenant :
- un boîtier supérieur muni d'un couvercle au moins partiellement translucide ;
- un circuit imprimé s'étendant dans un plan sous le couvercle translucide,
- une pluralité de capteurs de radiation solaire verticale, cette radiation solaire verticale étant la puissance reçue par unité de surface sur une surface verticale et ces capteurs de radiation solaire verticale étant répartis sur une surface du circuit imprimé tournée vers le couvercle,
les différents capteurs de radiation solaires verticale comprenant chacun une surface active faisant face à une direction discrète, dite direction normale de radiation, chaque direction normale de radiation étant normale à un axe perpendiculaire au plan du circuit imprimé.

Cette station météorologique est caractérisée
- en ce qu'elle comprend une pluralité de capteurs d'éclairement vertical répartis sur le bord extérieur de la surface du circuit imprimé tournée vers le couvercle,
- en ce que les différents capteurs d'éclairement vertical comprennent chacun une surface active faisant face à une direction discrète, dite direction normale d'éclairement, chaque direction normale d'éclairement étant normale à l'axe perpendiculaire au plan du circuit imprimé, et
- en ce que les capteurs de radiation solaire verticale et les capteurs d'éclairement vertical sont combinés, soit en étant intégrés à des composants électroniques, un capteur de radiation solaire verticale et un capteur d'éclairement vertical étant intégrés en une paire de capteurs dans un même composant électronique, soit en étant disposés par paire sur le circuit imprimé .

Grâce à l'invention, la station météorologique est capable de fournir des informations de radiation solaire verticale exploitables pour toutes les façades d'un bâtiment, tout en étant d'un prix de revient modéré et d'une fiabilité satisfaisante.

Selon des aspects avantageux mais non obligatoires de l'invention, une telle station météorologique peut incorporer une ou plusieurs des caractéristiques suivantes, prises selon toute combinaison admissible :
- Elle comprend un capteur de radiation globale positionné au centre du circuit imprimé.
- Le capteur de radiation globale est positionné, au droit d'un guide de lumière supporté par le couvercle du boîtier supérieur.
- Le boîtier supérieur intègre un capteur de pluie.
- Les directions normales discrètes de radiation et les directions normales discrètes d'éclairement sont décalées angulairement les unes par rapport aux autres, autour de l'axe perpendiculaire au plan du circuit imprimé.
- Chaque capteur de radiation solaire verticale est composé de plusieurs surfaces actives.
- Les capteurs de radiation solaire verticale sont au nombre de huit et répartis régulièrement sur le circuit imprimé.
- Le circuit imprimé est en forme de disque.
- La station météorologique comprend un pied creux, supportant le boîtier supérieur et intégrant un conduit pour un câble électrique d'alimentation de composants supportés par le circuit imprimé.
- La station météorologique comprend un dispositif d'orientation, tel qu'une boussole ou une graduation.
- La station météorologique comprend des moyens matériels et logiciels adaptés à récupérer l'information fournie par un ou plusieurs capteurs et à fournir une valeur de radiation verticale pour une orientation donnée correspondant à une façade du bâtiment.

Selon un deuxième aspect, l'invention concerne une installation de commande automatisée des conditions de confort et/ou de sécurité dans un bâtiment, cette installation comprenant un réseau et des équipements électriques équipant des zones ou des façades du bâtiment et raccordés au réseau, caractérisée en ce qu'elle comprend une station météorologique telle que mentionnée ci-dessus, installée sur un toit du bâtiment, raccordée au réseau et apte à déterminer une valeur de radiation verticale correspondant à l'orientation d'au moins une façade du bâtiment.

Cette installation présente les mêmes avantages que la station météorologique mentionnée ci-dessus.

Selon un troisième aspect, l'invention concerne une méthode de configuration d'une station météorologique comprenant au moins une étape de détermination de l'orientation de la station météorologique et une étape d'affectation d'un ou plusieurs capteurs à une orientation donnée.

Avantageusement, cette méthode comprend une étape de paramétrage d'une ou plusieurs caractéristiques des capteurs.

L'invention sera mieux comprise à la lecture de la description qui va suivre, donnée uniquement à titre d'exemple et faite en se référant aux dessins annexés sur lesquels :
- La figure 1 représente un bâtiment dans lequel une station météorologique selon un premier mode de réalisation de l'invention est mise en œuvre.
- La figure 2 représente une installation selon l'invention qui équipe le bâtiment de la figure 1 et qui inclut la station météorologique.
- La figure 3 représente une station météorologique selon l'art antérieur.
- La figure 4 représente de manière schématique une station météorologique conforme à un premier mode de réalisation de l'invention.
- La figure 5 représente de manière schématique un circuit imprimé de la station météorologique de la figure 4.
- La figure 6 est une vue analogue à la figure 5 et représente de manière schématique un circuit imprimé d'une station météorologique conforme à un deuxième mode de réalisation de l'invention.

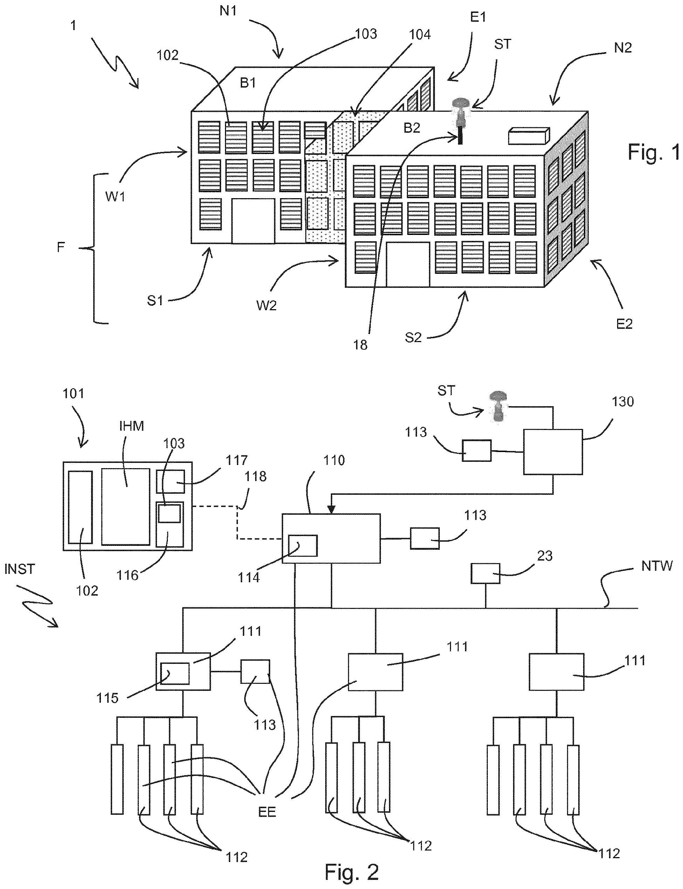

La figure 1 représente un bâtiment 1, par exemple de type tertiaire, en deux parties B1 et B2, à usage de bureaux par exemple. Les deux parties du bâtiment comprennent une pluralité d'ouvertures 102, notamment des fenêtres, disposées sur des façades S1, S2, E1, E2, N1, N2, W1, W2 orientées au Sud, Est, Nord, Ouest. Les façades N1, N2, W1, W2 sont cachées à la figure 1. Les ouvertures 102 sont équipées d'écrans mobiles motorisés 103, notamment des écrans de fermeture, d'occultation ou de protection solaire, une partie de ceux-ci étant représentée en position fermée par des hachures horizontales sur les façades S1, S2, E1 et E2.

Dans ce qui suit, la lettre F est utilisée pour désigner une des façades S1, S2, E1, E2, N1, N2, W1 ou W2. En outre, la lettre Z est utilisée pour désigner une zone de contrôle des écrans mobiles motorisés 103 sur une façade F.

Le bâtiment B est équipé d'une installation INST, pour l'essentiel représentée à la figure 2, et qui sert à commander automatiquement les conditions de confort et/ou de sécurité dans ce bâtiment. Cette installation est une installation de gestion technique du bâtiment, connue plus généralement, sous l'expression « Building Automation Systems » en langue anglaise. Elle vise à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures) dans et autour du bâtiment. Des ensembles de règles ou automatismes régissent la commande d'équipements électriques par un système de supervision programmable, afin d'assurer un meilleur confort des occupants du bâtiment ou encore d'optimiser la consommation d'énergie. Ces automatismes sont programmables, afin d'assurer un confort des occupants du bâtiment ou encore d'optimiser la consommation d'énergie de manière adaptée dans le bâtiment.

Afin d'optimiser le confort des utilisateurs et les performances énergétiques de l'installation INST, le pilotage des équipements électriques manœuvrant des écrans mobiles motorisés 103 tient compte de l'exposition au soleil des façades et éventuellement de la présence des ombres portées au niveau de chaque zone Z ou de chaque façade F du bâtiment.

Des conditions locales, telles que le rayonnement solaire, la température, la circulation du vent ou de la pluie, les risques de gel, etc, sont estimées à partir de grandeurs physiques mesurables associées à ces conditions, en tenant compte de l'influence exercée par le bâtiment et son environnement au niveau de chaque zone Z ou de chaque façade F.

Ces grandeurs physiques mesurables G sont, par exemple, l'éclairement ou le flux d'énergie solaire directe reçu par une ouverture 102 ou un groupe d'ouvertures, la vitesse et la direction du vent au niveau d'une façade F, les températures extérieure et intérieure au bâtiment B, etc.

Les valeurs de ces grandeurs physiques mesurables sont déterminées soit par des mesures effectuées par différents capteurs 113 ou 123 de l'installation INST, soit par modélisation, soit par récupération d'informations dans des bases de données relatives au bâtiment B et à son environnement.

Une ombre portée sur la façade S1 de la première partie B1 du bâtiment par la deuxième partie B2 du bâtiment est représentée à la figure 1 par une zone grisée 104. Le reste des façades visibles est exposé au soleil, recevant ainsi un flux d'énergie solaire directe. Les écrans mobiles motorisés 103 des ouvertures 102 situées dans la zone d'ombre sont relevés, tandis que les écrans mobiles motorisés 103 des ouvertures 102 situées au soleil sont baissés, de manière à respecter l'exposition propre à chaque ouverture 102, plutôt que par zone prédéfinie à l'avance au niveau d'une unité de commande centrale. Cette gestion des ombres portées peut être réalisée à partir de capteurs associés à chaque ouverture, ou par l'utilisation de modèles mathématiques et graphiques du bâtiment B et par une prévision de la présence ou non d'une ombre sur chaque ouverture 102, selon différents horaires de la journée pour une année calendaire.

Toutefois, cette gestion des ombres dépend également de la présence ou de l'absence globale de rayonnements solaires directs ou diffus, lesquels rayonnements peuvent être déterminés par le biais d'une station ST de capteurs ou station météorologique, installée sur un mât 18 sur le toit du bâtiment 1.

L'installation automatisée INST, représentée en figure 2, permet la gestion dynamique des façades F du bâtiment B.

Les écrans de protection solaire mobiles motorisés 103 sont chacun pilotés par un actionneur 112, ce dernier permettant l'ouverture et la fermeture automatisée de l'écran mobile motorisé 103 auquel il est associé. Les actionneurs 112 sont généralement masqués dans des rails ou des caissons lorsqu'ils sont installés dans le bâtiment B et sont alors difficilement accessibles par l'intérieur ou l'extérieur de ce bâtiment.

L'automatisation de l'installation INST du bâtiment B, notamment des écrans mobiles motorisés 103 via leurs actionneurs 112, est basée sur la présence d'une unité de commande centrale 110, de contrôleurs locaux 111 et de divers capteurs 113 intérieurs ou extérieurs, tels que des capteurs de présence, luminosité, température, etc. Cette installation automatisée INST permet de gérer notamment le confort et la thermique dans le bâtiment B. Les capteurs 113 peuvent être gérés dans certains modes de réalisation par une unité 130 de gestion des capteurs. La station météorologique ST fait également partie de ces divers capteurs 113 permettant l'automatisation de l'installation du bâtiment.

L'unité de commande centrale 110 comprend notamment une unité électronique 114, comprenant par exemple un microprocesseur, une mémoire, ainsi que des éléments de communication tels que des émetteurs et/ou récepteurs. De la même manière, les contrôleurs locaux 111 comprennent chacun une unité électronique 115, comprenant par exemple un microprocesseur, une mémoire, ainsi que des éléments de communication tels que des émetteurs et/ou récepteurs.

L'installation peut également comprendre un dispositif de configuration 101 comprenant des moyens informatiques, notamment une interface IHM, telle qu'un écran et des moyens d'interaction avec celui-ci, par exemple un clavier, une souris et/ou un panneau tactile, des moyens de calcul 116, comme une unité logique de traitement, et des moyens 117 de réception et de transmission d'informations. Le dispositif de configuration 101 peut être un ordinateur, notamment de type PC, un assistant numérique, un téléphone portable ou un outil spécifiquement dédié à la configuration d'une telle installation. Il se connecte à l'installation INST directement ou par l'intermédiaire d'un des moyens de commande, par voie filaire ou non filaire, notamment par un réseau IP hiérarchique. Cette connexion 118 est représentée sous la forme d'un trait pointillé à la figure 2 ; elle peut être temporaire.

Les différents équipements électriques EE de l'installation INST, à savoir l'unité de commande 110, les actionneurs 112, les contrôleurs 111 et les capteurs 113 ou 123dont la station météorologique ST, communiquent entre eux par le biais de réseaux NTW sans fil, radio notamment, ou filaires, de type réseaux câblés à courant porteur. Un exemple d'architecture de l'installation INST est représenté en figure 2. Dans d'autres exemples non représentés, les équipements électriques EE sont raccordés à un bus de données commun, tel qu'un bus multipoints autorisant une connexion unidirectionnelle ou bidirectionnelle, par exemple de type RS485. Ce bus de données est relié à une unité centrale, de manière à former un réseau qui autorise l'échange de données entre les équipements et l'unité de commande. Les équipements comprennent alors leurs propres contrôleurs ou au moins leurs propres éléments de communication tels que des émetteurs et/ou récepteurs. Alternativement, le réseau NTW est un réseau hiérarchique câblé comportant un premier réseau de rang n et une pluralité de sous-réseaux de rangs inférieurs, auxquels sont raccordés les différents équipements électriques. Le réseau NTW comprend alors des équipements réseau tels que des passerelles ou des routeurs, dont la fonction principale est de faire transiter des messages sur différentes branches du réseau entre un émetteur et un ou plusieurs destinataires. Les équipements électriques et les équipements réseau comprennent chacun une ou plusieurs interfaces de communication qui leur permettent de communiquer sur le réseau hiérarchique.

Les différents équipements électriques EE et/ou équipements réseau utilisent un ou plusieurs protocoles de communication pour communiquer entre eux ou vers l'extérieur du réseau NTW. En particulier, le protocole utilisé peut être un protocole IP (en anglais « Internet Protocol »), par exemple basé sur le protocole IPv4 ou le protocole IPv6.

Le terme d'actionneur 112 utilisé dans cette demande comprend notamment la partie électronique ou électromécanique permettant le contrôle du mouvement d'un écran mobile motorisé 103 ou le contrôle d'état d'une charge, par exemple d'une lampe, mais également les moyens électroniques de dialogue avec les différents autres équipements de l'installation INST, notamment les dispositifs d'émission et de réception de trames de communication échangées entre les différents composants de l'installation selon des moyens connus.

La gestion dynamique d'écrans de protection solaire est fortement sous l'influence de l'ensoleillement.

En particulier, on peut donner les définitions suivantes :
- Le rayonnement solaire se compose de l'ultraviolet, du visible et de l'infrarouge proche, dans la gamme de longueur d'onde d'environ 300 à 3000 nanomètres (nm, 10⁻⁹ m).
- L'éclairement ou illuminance est la partie visible du spectre solaire de la lumière. Il est mesuré en LUX.
- Le rayonnement global, ou radiation globale, est évalué(e) en W/m² : il s'agit de la puissance reçue sur une surface horizontale, que ce soit de manière directe, diffuse ou réfléchie par une autre surface.
- Le rayonnement ou radiation vertical(e) est la puissance reçue sur une surface verticale, qui est mesurée en W/m².

Une mesure précise du rayonnement solaire peut se faire à l'aide d'un radiomètre.

Les façades des bâtiments sont généralement plutôt verticales et les mesures d'éclairement ou de radiation globale ne sont pas toujours adaptées et suffisantes pour déterminer les rayonnements solaires reçus par ces façades.

Il est donc intéressant de pouvoir déterminer le rayonnement relatif à chaque façade F du bâtiment B, sans toutefois être obligé d'installer des capteurs sur chaque façade F.

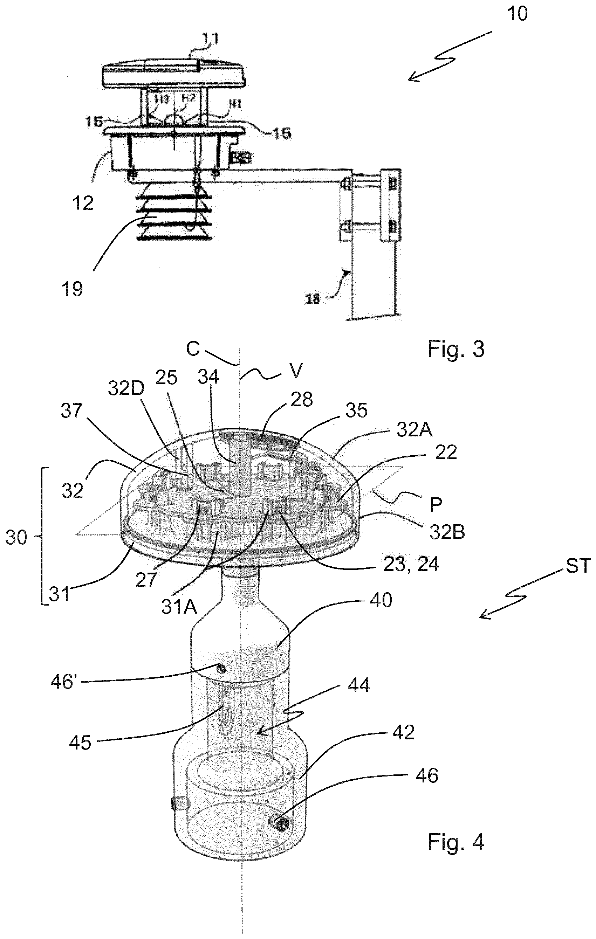

Une station météorologique 10 selon l'art antérieur est décrite en référence à la figure 3. La station météorologique 10 comprend une portion sphérique supérieure 11 dont le couvercle est partiellement translucide, ladite portion sphérique supérieure intégrant un capteur de pluie et un capteur de rayonnement ou radiation solaire non représentés, le capteur de radiation solaire est par exemple constitué d'une photodiode. La portion sphérique 11 est maintenue par des supports 15 à distance d'un boîtier électronique 12. Dans l'espace ménagé par les supports 15 se situent trois capteurs H1, H2, H3 permettant de déterminer la vitesse et la direction du vent. La station météorologique 10 est, par ailleurs, montée grâce à un bras 17 sur un mât 18. Sous le boîtier électronique 12 se trouvent des ailettes de refroidissement 19. Cette station météorologique 10 comprend également des organes de communication, filaires ou non filaires, notamment en vue d'une liaison avec un réseau du type du réseau NTW.

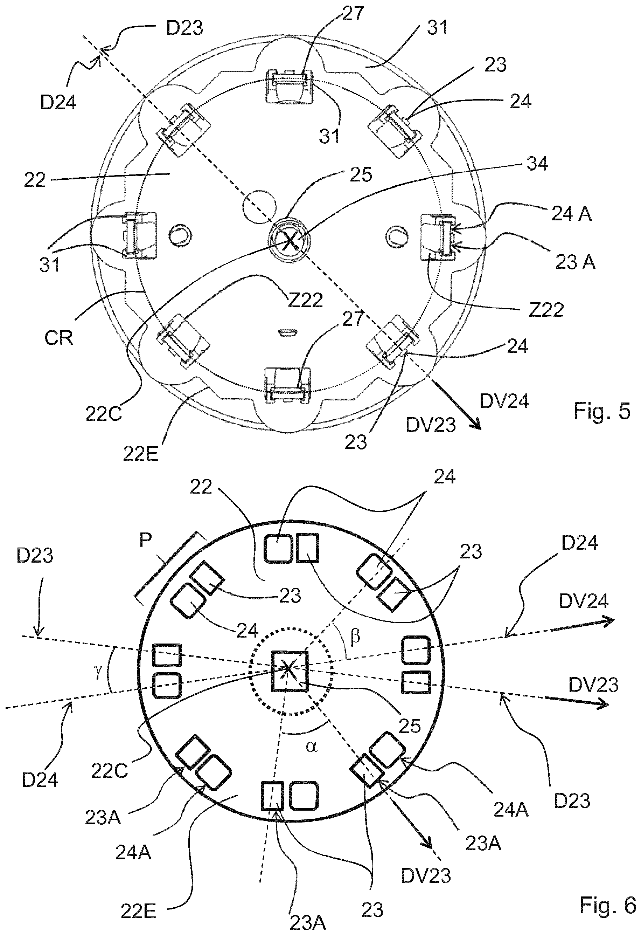

La station météorologique ST selon le premier mode de réalisation de l'invention est décrite en référence aux figures 4 et 5. Cette station météorologique ST comprend un boîtier supérieur 30 dont le couvercle 32 est au moins partiellement translucide. Dans l'exemple, le boîtier supérieur 30 comprend une embase 31 et le couvercle 32.

Le boîtier supérieur 30 intègre un capteur de pluie 28 et une pluralité de capteurs, notamment de radiation solaire verticale 23 et d'éclairement vertical 24. Une plaque de circuit imprimé 22 ou PCB (pour « Printed Circuit Board ») globalement en forme de disque s'étend sous le couvercle translucide 32. Dans ce qui suit, par souci de simplicité, cette plaque 22 est dénommée « circuit imprimé ». Le circuit imprimé 22 s'étend dans un plan P perpendiculaire à un axe V, lui-même dirigé vers le couvercle translucide 32 et passant par le centre géométrique 22C du circuit imprimé 22. Le circuit imprimé 22 présente préférentiellement un bord extérieur 22E de forme géométrique régulière et complexe, donc non circulaire, avec des ondulations régulièrement réparties autour de l'axe V.

Comme cela ressort plus particulièrement des figures 4 et 5, les capteurs 23 et 24 sont combinés, en étant superposés par paires les uns aux autres. En d'autres termes, un capteur de radiation solaire verticale 23 et un capteur d'éclairement vertical 24 sont intégrés en une paire de capteurs dans un même composant électronique 27.

Les composants électroniques 27 sont positionnés au niveau de zones découpées Z22 du circuit imprimé 22 et supportés par des pattes 31A formées par l'embase 31 et qui traversent les zones Z22 en direction du couvercle 32. Les capteurs 23 et 24 intégrés aux composants 27 sont répartis le long d'un cercle CR de centre 22C, inscrit dans la forme géométrique du bord 22E et proche de celui-ci. La forme géométrique complexe du bord 22E assure la rigidité du circuit imprimé 22, en tenant compte des zones découpées Z22.

Chaque capteur 23 fait face respectivement à une direction normale de radiation D23 et chaque capteur 24 fait face à une direction normale d'éclairement D24, ces directions étant discrètes et normales à l'axe V, qui est perpendiculaire au plan P, dans lequel s'étend le circuit imprimé 22, et qui passe par le centre 22C de ce circuit imprimé.

Une direction est normale à un axe lorsqu'elle est perpendiculaire à et sécante avec cet axe.

Dans ce mode de réalisation, les directions D23 et D24 sont superposées.

Le circuit imprimé 22 supporte les capteurs de radiation solaire 23 et d'éclairement 24, ainsi qu'optionnellement un capteur de radiation globale 25. Il supporte également une unité de contrôle de la station météorologique ST, réalisée sous la forme d'autres composants électroniques non représentés et montés sur le circuit imprimé 22.

Le couvercle translucide 32 comprend une première zone de couvercle 32A, ou zone latérale translucide, s'étendant sous la forme d'une couronne et à l'intérieur de laquelle peut être logé le circuit imprimé 22, et une deuxième zone de couvercle 32B, se raccordant à la première zone et formant un dôme. Les deux zones 32A et 32B peuvent former un ensemble monobloc. La liaison entre la première zone latérale 32A et la deuxième zone 32B de couvercle peut être courbe, c'est-à-dire sans arête saillante.

Le capteur pluie est, de préférence, positionné sur la deuxième zone 32B du couvercle 32. Dans cet exemple, le couvercle 32 comprend une ouverture dans laquelle est installé le capteur de pluie 28 qui est relié au circuit imprimé 22 par une nappe 35 de fils électriques.

Le couvercle 32 a préférentiellement une symétrie de révolution, centrée sur un axe C. L'axe C peut être confondu avec l'axe V lorsque le circuit imprimé 22 et le couvercle 32 sont assemblés.

Le couvercle translucide 32 comprend également en son centre un guide de lumière 34, en vis-à-vis du capteur de radiation globale 25, positionné au centre du circuit imprimé 22. Alternativement, une valeur de radiation globale peut être déduite de données fournies par les capteurs de radiation solaire 23, associées éventuellement aux données fournies par les capteurs d'éclairement.

Par ailleurs, le couvercle 32 est immobilisé sur l'embase 31 au moyen de deux pions 37 qui traversent des alésages prévus à cet effet dans l'embase 31 et dans le circuit imprimé 22 et qui pénètrent dans des logements borgnes ménagés à l'intérieur de pattes 32D et qui s'étendent à partir du couvercle 32, en direction de l'embase 31.

L'embase 31 du boîtier supérieur 30 repose sur un pied 40 avec lequel elle est assemblée. Le pied 40 et l'embase 31 sont formés par deux pièces distinctes. En variante, ils peuvent former ensemble une pièce monobloc.

Le pied 40 comprend une portion tubulaire inférieure 42, laquelle est destinée à être positionnée directement sur un mât 18 ou sur un support non représenté rattaché à un mât 18. Ainsi, la station météorologique ST est supportée en hauteur en extrémité supérieure du mât 18, pour être totalement indépendante de structures environnantes également présentes sur le toit du bâtiment B.

Une ou plusieurs vis de fixation 46 s'étendant à travers une paroi de la portion tubulaire 42 permettent de fixer la station météorologique ST au mât 18, éventuellement simplement par rattrapage de jeu entre le diamètre interne du pied 40 et le diamètre externe du mât 18. Une vis de fixation intermédiaire 46' permet l'assemblage et la fixation en rotation de différentes parties du pied.

Le pied 40 de la station météorologique ST est également creux. Il intègre notamment un conduit 44 et une attache 45 pour un câble électrique non représenté. Ce câble électrique comprend notamment des câbles d'alimentation des composantes supportés par le circuit imprimé 22 et des câbles de transmission de données, notamment des données issues des différents capteurs.

La station météorologique ST peut également comprendre d'autres capteurs, notamment un capteur de vent, en particulier de vitesse de vent, un capteur de température, un capteur d'humidité. Les différents capteurs sont préférentiellement raccordés à l'unité de contrôle de la station météorologique ST.

La station météorologique ST comprend également des éléments de communication, tels qu'un émetteur et/ou un récepteur non représentés. Ceux-ci font éventuellement partie de l'unité de contrôle. Ainsi, la station météorologique ST est capable de fournir ou de recevoir de l'information lorsqu'elle est connectée au réseau NTW. En particulier, la station météorologique ST fournit à des équipements électriques du réseau des valeurs de mesure issues des différents capteurs. Alternativement, la station météorologique ST traite tout ou partie des valeurs de mesure issues des différents capteurs, par exemple en les comparant à des seuils enregistrés dans une mémoire de l'unité de contrôle, et fournit des ordres de commande permettant par exemple de contrôler la position des écrans mobiles motorisés de protection solaire 103.

Le circuit imprimé 22 et différents composants supportés par ce circuit imprimé selon un premier mode de réalisation sont détaillés sur la figure 5.

Chacun des capteurs 23 et 24 comprend une surface active 23A, respectivement 24A, avec une direction de visée principale DV23 ou DV24 qui définit l'orientation du capteur dans l'espace et qui est orientée dans un sens d'éloignement de ce capteur. En particulier, la direction de visée principale DV23 ou DV24 est orthogonale au plan de la surface active 23A ou 24A de chaque capteur. La surface active d'un capteur est la surface de ce capteur sensible au paramètre physique à mesurer. Chaque capteur possède également des caractéristiques relatives à la mesure ou au traitement de l'information associée au paramètre physique mesuré, telles que la réponse en fonction de l'éclairement, notamment la linéarité et les limitations du capteur pour des éclairements faibles (courant d'obscurité) ou forts (saturation), la sensibilité, la réponse spectrale, la réponse temporelle ou la résolution spatiale (liée à la taille et à la géométrie de la surface active). Il est possible également de paramétrer certaines de ces caractéristiques.

Dans ce mode de réalisation, les surfaces actives des capteurs 23 et 24 intégrés dans un même composant électronique 27 sont confondues, de sorte que leurs directions de visées DV23 et DV24 sont superposées, ce que représente l'unique flèche de la figure 5, avec les références DV23 et DV24.

Dans le cas où les capteurs 23, 24 comprennent plusieurs surfaces actives, la direction de visée principale DV23 ou DV24 est orthogonale au plan des surfaces actives 23A ou 24A de chaque capteur.

Les capteurs de radiation solaire verticale 23 sont régulièrement répartis sur la surface 22T du circuit imprimé 22 tournée vers le couvercle 32, en particulier sur le bord extérieur 22E de la surface 22T du circuit imprimé 22, au niveau du cercle CR. Leurs surfaces actives 23A font ainsi face chacune à une direction discrète D23 parmi plusieurs directions discrètes, normale à l'axe V, ces directions discrètes étant dites directions normales de radiation. En d'autres termes, la direction de visée principale DV23 de chaque capteur de radiation solaire verticale 23 est alignée avec une direction normale de radiation D23.

De la même manière, les capteurs d'éclairement vertical 24 sont régulièrement répartis la surface 22T du circuit imprimé tournée vers le couvercle 32, en particulier sur le bord 22E, au niveau du cercle CR. Leurs surfaces actives 24A font ainsi face chacune à une direction discrète D24 parmi plusieurs directions discrètes, normale à l'axe V, ces directions discrètes étant dites directions normales d'éclairement. En d'autres termes, la direction de visée principale DV24 de chaque capteur d'éclairement vertical 23 est alignée avec une direction normale d'éclairement D24.

Dans ce mode réalisation, comme les directions de visées DV23 et DV24 de deux capteurs 23 et 24 intégrés à un même composant sont confondues, les directions de normale de radiation D23 et d'éclairement D24 auxquelles dont faces leurs surfaces actives respectives 23A et 24A sont également confondues. C'est ce que représente l'unique droite en pointillés à la figure 5 qui porte les références D23 et D24.

Du fait du positionnement des capteurs 23, 24 près du bord 22E du circuit imprimé 22, les directions normales discrètes de radiation D23 et les directions normales discrètes d'éclairement D24 de deux séries de capteurs 23 et 24 intégrées à deux composants 27 distincts peuvent être décalées les unes par rapport aux autres, angulairement autour de l'axe V. Alternativement, les surfaces actives 23A et/ou 24A des différents capteurs 23 ou 24 peuvent être positionnées de telle sorte que les directions normales discrètes de radiation D23 et les directions normales discrètes d'éclairement D24 sont parallèles, voire confondues.

De façon avantageuse, les capteurs de radiation verticale 23, d'une part, et les capteurs d'éclairement vertical 24, d'autre part, sont au nombre de huit et répartis régulièrement autour de l'axe V.

Dans le deuxième mode de réalisation de l'invention représenté à la figure 6, les éléments analogues à ceux du premier mode de réalisation portent les mêmes références. Lorsqu'une référence apparaît sur la figure 6 sans être mentionnée dans la description correspondante, cette référence correspond au même objet que celui portant la même référence dans le premier mode de réalisation.

Dans ce deuxième mode de réalisation, les capteurs 23 et 24 sont combinés. En d'autres termes, les capteurs 23 et 24 sont montés sur le circuit imprimé 22 par paires P, chaque paire comprenant un capteur 23 et un capteur 24 juxtaposés. Chaque paire fait face respectivement à une direction normale de radiation D23 et une direction normale d'éclairement D24, ces directions étant discrètes et normales à l'axe V perpendiculaire au plan P dans lequel s'étend le circuit imprimé 22 et passant par le centre 22C de ce circuit imprimé.

Plus précisément, chaque capteur 23 ou 24 comprend une surface active 23A ou 24A qui fait face à une direction normale de radiation D23, respectivement à une direction normale d'éclairement D24, en ayant sa direction de vises DV23, respectivement DV24, alignée sur cette direction normale.

De préférence, chaque capteur de radiation solaire verticale 23 est composé de plusieurs surfaces actives. Chaque capteur d'éclairement vertical 24 peut également être composé de plusieurs surfaces actives.

Comme dans le premier mode de réalisation, les capteurs 23 et 24 sont répartis sur le bord extérieur 22E de la surface 22T du circuit imprimé 22 tournée vers le couvercle 32.

Du fait du positionnement des capteurs 23, 24 près du bord 22E du circuit imprimé 22, les directions normales discrètes de radiation D23 et les directions normales discrètes d'éclairement D24 peuvent être décalées les unes par rapport aux autres, angulairement autour de l'axe V. Alternativement, les surfaces actives 23A et/ou 24A des différents capteurs 23 ou 24 peuvent être positionnées de telle sorte que les directions normales discrètes de radiation D23 et les directions normales discrètes d'éclairement D24 sont parallèles, voire confondues.

De façon avantageuse également pour le deuxième mode de réalisation, les capteurs de radiation verticale 23, d'une part, et les capteurs d'éclairement vertical 24, d'autre part, sont au nombre de huit et répartis régulièrement autour de l'axe V.

Dans l'exemple, compte tenu du nombre de capteurs 23 et 24, l'angle α de décalage entre deux directions normales discrètes de radiation D23 adjacentes vaut 45°, de même que l'angle β entre deux directions normales discrètes d'éclairement D24 adjacentes. Les valeurs des angles α et β ne sont pas forcément égales et peuvent être ajustées, en fonction du nombre et de la répartition régulière ou non des capteurs 23 et 24 sur le bord 22E.

En outre, lorsque chaque direction normale de radiation D23, à laquelle fait face un capteur de radiation solaire vertical 23, est décalée angulairement autour de l'axe V par rapport à la direction normale d'éclairement à laquelle fait face le capteur d'éclairement vertical 24 de la même paire P de capteur, d'un angle γ non nul dont la valeur est comprise entre 0 et 15°.

Les observations qui suivent sont valables pour les deux modes de réalisation représentés sur les figures 4 à 6.

Au centre 22C du circuit imprimé 22 est positionné le capteur de radiation globale 25, au droit du guide de lumière 34 supporté par le couvercle 32 du boîtier supérieur 30 ou par le circuit imprimé 22. Cette radiation globale est utile pour déterminer l'énergie globale environnante et adapter le comportement des actionneurs 112 en fonction des seuils de radiation globale. Cette radiation globale permet notamment de distinguer un ciel couvert d'un ciel clair, voire une situation d'ensoleillement diffus.

Les mêmes capteurs 23, 24 et 25 peuvent être utilisés pour déterminer la radiation globale et verticale dans différentes directions, dans l'exemple ci-dessus, selon huit directions, ou comme il sera vu plus loin, selon n'importe quelle direction choisie. Différentes solutions de calcul, obtenues de préférence par algorithmie, permettent de définir des valeurs de radiation à partir des paramètres physiques mesurés par les capteurs 23, 24 et 25.

Selon un exemple de réalisation, on utilise deux capteurs de radiation verticale 23 ou plus, positionnés de manière judicieuse, pour déterminer la radiation verticale dans n'importe quelle direction radiale à l'axe V ou pour déterminer la radiation globale.

En pratique, l'orientation de la station météorologique ST est importante pour pouvoir affecter à chaque façade F la valeur de radiation qui la concerne.

Cette orientation peut être automatique.

Selon un premier mode de réalisation, la station météorologique ST comprend une boussole non représentée, qui fournit l'information nécessaire à son orientation. La boussole utilisée peut être un composant d'un système de localisation tel qu'un GPS (Géo-Positionnement par Satellite ou Global Positioning System en anglais). Cette information est mise à jour y compris dans le cas où l'orientation de la station météorologique ST est modifiée, par exemple suite à un démontage pour maintenance ou nettoyage.

Selon un autre mode de réalisation non représenté, l'orientation de la station météorologique ST est définie à partir des mesures fournies par les différents capteurs.

L'orientation peut également être manuelle. L'installateur de la station météorologique ST sur le mât 18 positionne exactement la station en respectant une orientation prédéfinie ou positionne la station météorologique ST à sa convenance puis indique son orientation par le biais d'une Interface Homme-Machine prévue à cet effet, notamment l'interface IHM du dispositif de configuration 101. Dans ce dernier cas, la station météorologique ST peut comprendre une graduation avec une direction principale et l'utilisateur entre le décalage de cette graduation principale par rapport à une orientation physique fournie par une boussole externe. Alternativement, l'un au choix des capteurs 23 ou 24 peut être orienté sur une direction donnée, par exemple le Nord. L'installateur indique alors, par le biais d'une Interface Homme-Machine prévue à cet effet, quel capteur est orienté au Nord. Les capteurs doivent pour cela être repérés par un code. En pratique, la graduation peut correspondre à l'emplacement de la vis 46 de fixation de la station météorologique ST sur le mât 18 ou à l'emplacement de la vis 46' de fixation intermédiaire.

En principe, il est également judicieux d'orienter la station météorologique ST par rapport à la direction du vent et pas seulement par rapport à la radiation solaire.

A partir de la donnée d'orientation, la station ST affecte à chacune des directions normales de radiation D23 une orientation donnée.

Les façades F du bâtiment n'étant pas nécessairement orientées précisément selon les quatre points cardinaux, les données fournies par des capteurs selon deux directions normales de radiation adjacentes D23 pourront être combinées pour fournir une valeur de radiation verticale correspondant à une direction intermédiaire, orthogonale à une façade F. En particulier, la valeur de radiation verticale selon une direction normale de radiation, intermédiaire par rapport aux directions normales de radiation D23 de deux capteurs 23 ou plus, est obtenue par pondération des valeurs de radiation verticale fournis par ces deux capteurs ou plus. Alternativement, la valeur de radiation fournie par le capteur 23 orienté dans la direction la plus proche de la normale à la façade F est utilisée pour cette façade.

De manière similaire, les données fournies par des capteurs selon deux directions normales d'éclairement adjacentes D24 pourront être combinées pour fournir une valeur d'éclairement vertical correspondant à une direction intermédiaire orthogonale à une façade F.

Ainsi, la station météorologique ST comprend des moyens matériels et logiciels adaptés à récupérer l'information fournie par un ou plusieurs capteurs 23 ou 24 et à fournir une valeur de radiation verticale correspondant à l'orientation de tout ou partie d'une façade F du bâtiment B. Ceci est particulièrement avantageux pour les bâtiments dont les façades sont courbes. Il est ainsi possible de diviser les façades F en bandes verticales et d'associer à chaque bande une information de radiation verticale correspondant à l'orientation de cette bande de façade, l'information de radiation verticale étant déterminée par la station météorologique ST. Il est également possible d'associer à chaque bande une information d'éclairement vertical correspondant à l'orientation de cette bande de façade, l'information d'éclairement vertical étant déterminée par la station météorologique ST.

Dans les deux modes de réalisation, le fait que les capteurs 23 et/ou 24 sont répartis sur le bord extérieur 22E signifie que ces capteurs sont disposés à à égale distance du centre du circuit imprimé 22, plus proches de la périphérie extérieure du circuit imprimé que du centre 22C de celui-ci. Le centre du circuit imprimé est le centre du cercle délimitant la surface du circuit imprimé sur laquelle sont répartis les capteurs, dans l'exemple où le circuit imprimé 22 est en forme de disque. Alternativement, le centre est le centre de gravité de la forme géométrique que prend la surface du circuit imprimé sur laquelle sont répartis les capteurs.

L'invention concerne également une méthode de configuration d'une station météorologique ST, selon le premier ou le deuxième mode de réalisation. Cette méthode comprend notamment les étapes suivantes :
- Eventuellement entrée dans un mode de configuration,
- Détermination de l'orientation de la station ST,
- Affectation d'un ou plusieurs capteurs 23 et/ou 24 à une façade F donnée,
- Eventuellement une étape de paramétrage des caractéristiques des capteurs, notamment paramétrage de la dimension des surfaces actives des capteurs considérées.

L'étape de détermination de l'orientation de la station ST peut être automatique ou manuelle, comme expliqué ci-dessus.

L'installation INST de commande automatisée des conditions de confort et/ou de sécurité dans le bâtiment B comprend le réseau NTW, des équipements électriques, 112 ou équivalents, équipant des zones Z ou des façades F du bâtiment raccordés au réseau NTW et une station météorologique ST telle que décrite précédemment. La station météorologique ST fournit à l'unité centrale de commande 110 une valeur de radiation verticale correspondant à l'orientation d'au moins une façade F du bâtiment. Pour cela, l'installation INST comprend des éléments 110, 111, 113, 114, 115, 130 matériels et/ou logiciels adaptés à récupérer les informations fournies par la station météorologique ST et à commander les équipements électriques EE, notamment les actionneurs 112, en fonction de ces informations.

## Revendications

1. Station météorologique (ST) destinée à être installée sur le toit d'un bâtiment (B), ce bâtiment comprenant une installation (INST) de commande automatisée des conditions de confort et/ou de sécurité dans le bâtiment, la station comprenant :
- un boîtier supérieur (30) muni d'un couvercle (32) au moins partiellement translucide ;
- un circuit imprimé (22) s'étendant dans un plan (P) sous le couvercle translucide;
- une pluralité de capteurs (23) de radiation solaire verticale, cette radiation solaire verticale étant la puissance reçue par unité de surface sur une surface verticale et ces capteurs de radiation solaire verticale étant répartis sur une surface (22T) du circuit imprimé (22) tournée vers le couvercle (32),
les différents capteurs de radiation solaires verticale (23) comprenant chacun une surface active (23A) faisant face à une direction discrète (D23), dite direction normale de radiation, chaque direction normale de radiation étant normale à un axe (V) perpendiculaire au plan (P) du circuit imprimé (22),
la station météorologique (ST) étant **caractérisée**
- **en ce qu'**elle comprend une pluralité de capteurs d'éclairement vertical (24) répartis sur le bord extérieur (22E) de la surface (22T) du circuit imprimé (22) tournée vers le couvercle (32),
- **en ce que** les différents capteurs d'éclairement vertical (24) comprennent chacun une surface active (24A) faisant face à une direction discrète (D24), dite direction normale d'éclairement, chaque direction normale d'éclairement étant normale à l'axe (V) perpendiculaire au plan (P) du circuit imprimé (22), et
- **en ce que** les capteurs de radiation solaire verticale (23) et les capteurs d'éclairement vertical (24) sont combinés, soit en étant intégrés à des composants électroniques (27), un capteur de radiation solaire verticale (23) et un capteur d'éclairement vertical (24) étant intégrés en une paire de capteurs dans un même composant électronique (27), soit en étant disposés par paire (P) sur le circuit imprimé (22).

2. Station météorologique (ST) selon la revendication 1, **caractérisée en ce qu'**elle comprend un capteur de radiation globale (25) positionné au centre (22C) du circuit imprimé (22).

3. Station météorologique (ST) selon la revendication 2, **caractérisée en ce que** le capteur de radiation globale (25) est positionné, au droit d'un guide de lumière (34) supporté par le couvercle (32) du boîtier supérieur (30).

4. Station météorologique selon l'une des revendications précédentes, **caractérisée en ce que** le boîtier supérieur (30) intègre un capteur de pluie (28).

5. Station météorologique (ST) selon la revendication précédente, **caractérisée en ce que** les directions normales discrètes de radiation (D23) et les directions normales discrètes d'éclairement (D24) sont décalées angulairement les unes par rapport aux autres, autour de l'axe (V) perpendiculaire au plan (P) du circuit imprimé (22).

6. Station météorologique (ST) selon l'une des revendications précédentes, **caractérisée en ce que** chaque capteur de radiation solaire verticale (23) est composé de plusieurs surfaces actives.

7. Station météorologique (ST) selon l'une des revendications précédentes, **caractérisée en ce que** les capteurs de radiation solaire verticale (23) sont au nombre de huit et répartis régulièrement sur le circuit imprimé (22).

8. Station météorologique (ST) selon l'une des revendications précédentes, **caractérisée en ce que** le circuit imprimé (22) est en forme de disque.

9. Station météorologique (ST) selon l'une des revendications précédentes, **caractérisée en ce qu'**elle comprend un pied (40) creux, supportant le boîtier supérieur (30) et intégrant un conduit (44) pour un câble électrique (45) d'alimentation de composants supportés par le circuit imprimé (22).

10. Station météorologique (ST) selon l'une des revendications précédentes, **caractérisée en ce qu'**elle comprend un dispositif d'orientation, tel qu'une boussole ou une graduation.

11. Station météorologique (ST) selon l'une des revendications précédentes, **caractérisée en ce qu'**elle comprend des moyens matériels et logiciels adaptés à récupérer l'information fournie par un ou plusieurs capteurs et à fournir une valeur de radiation verticale pour une orientation donnée correspondant à une façade (F) du bâtiment.

12. Installation (INST) de commande automatisée des conditions de confort et/ou de sécurité dans un bâtiment (B), l'installation comprenant un réseau (NTW) et des équipements électriques (EE) équipant des zones (Z) ou des façades (F) du bâtiment (B) et raccordés au réseau (NTW), **caractérisée en ce qu'**elle comprend une station météorologique (ST) selon l'une des revendications précédentes, installée sur un toit du bâtiment (B), raccordée au réseau (NTW) et apte à déterminer une valeur de radiation verticale correspondant à l'orientation d'au moins une façade (F) du bâtiment.

13. Méthode de configuration d'une station météorologique (ST) selon l'une des revendications 1 à 9, comprenant au moins une étape de détermination de l'orientation de la station météorologique (ST) et une étape d'affectation d'un ou plusieurs capteurs (23, 24) à une orientation donnée.

14. Méthode de configuration d'une station météorologique (ST) selon la revendication précédente, **caractérisée en ce qu'**elle comprend une étape de paramétrage d'une ou plusieurs caractéristiques des capteurs (23, 24).

## Patentansprüche

1. Wetterstation (ST), die dazu bestimmt ist, auf dem Dach eines Gebäudes (B) installiert zu werden, dieses Gebäude umfassend eine Anlage (INST) zur automatischen Steuerung der Komfort- und/oder Sicherheitsbedingungen in dem Gebäude, die Station umfassend:
- ein oberes Gehäuse (30), das mit einem zumindest teilweise lichtdurchlässigen Deckel (32) versehen ist;
- eine Leiterplatte (22), die sich in einer Ebene (P) unter dem lichtdurchlässigen Deckel erstreckt;
- eine Vielzahl von Sensoren (23) für vertikale Sonnenstrahlung, wobei diese vertikale Sonnenstrahlung die Leistung ist, die pro Flächeneinheit auf einer vertikalen Fläche empfangen wird, und diese Sensoren für vertikale Sonnenstrahlung über eine Fläche (22T) der Leiterplatte (22) verteilt sind, die dem Deckel (32) zugewandt ist,
die verschiedenen Sensoren für vertikale Sonnenstrahlung (23) jeweils umfassend eine aktive Oberfläche (23A), die einer separaten Richtung (D23), der sogenannten normalen Strahlungsrichtung, zugewandt ist, wobei jede normale Strahlungsrichtung senkrecht zu einer Achse (V) senkrecht zu der Ebene (P) der Leiterplatte (22) ist,
wobei die Wetterstation (ST) **dadurch gekennzeichnet ist,**
- **dass** sie eine Vielzahl von Sensoren für vertikale Beleuchtungsstärke (24) umfasst, die über den äußeren Rand (22E) der Oberfläche (22T) der Leiterplatte (22) verteilt sind, die dem Deckel (32) zugewandt ist,
- **dass** die verschiedenen Sensoren für vertikale Beleuchtungsstärke (24) jeweils eine aktive Fläche (24A) umfassen, die einer separaten Richtung (D24), der sogenannten normalen Beleuchtungsstärkenrichtung, zugewandt ist, wobei jede normale Beleuchtungsstärkenrichtung senkrecht zu der Achse (V) senkrecht zu der Ebene (P) der Leiterplatte (22) ist, und
- **dass** die Sensoren für vertikale Sonnenstrahlung (23) und die Sensoren für vertikale Beleuchtungsstärke (24) kombiniert sind, indem sie entweder in elektronische Bauteile (27) integriert sind, wobei ein Sensor für vertikale Sonnenstrahlung (23) und ein Sensor für vertikale Beleuchtungsstärke (24) als ein Sensorpaar in ein und dieselbe elektronische Komponente (27) integriert sind, oder indem sie als ein Paar (P) auf der Leiterplatte (22) angeordnet sind.

2. Wetterstation (ST) nach Anspruch 1, **dadurch gekennzeichnet, dass** sie einen globalen Strahlungssensor (25) umfasst, der in der Mitte (22C) der Leiterplatte (22) positioniert ist.

3. Wetterstation (ST) nach Anspruch 2, **dadurch gekennzeichnet, dass** der globale Strahlungssensor (25) direkt unter einem Lichtleiter (34) positioniert ist, der von dem Deckel (32) des oberen Gehäuses (30) getragen wird.

4. Wetterstation nach einem der vorherigen Ansprüche, **dadurch gekennzeichnet, dass** das obere Gehäuse (30) einen Regensensor (28) integriert.

5. Wetterstation (ST) nach dem vorherigen Anspruch, **dadurch gekennzeichnet, dass** die separaten normalen Strahlungsrichtungen (D23) und die separaten normalen Beleuchtungsstärkenrichtungen (D24) winkelig voneinander um die Achse (V) senkrecht zu der Ebene (P) der Leiterplatte (22) versetzt sind.

6. Wetterstation (ST) nach einem der vorherigen Ansprüche, **dadurch gekennzeichnet, dass** jeder Sensor für vertikale Sonnenstrahlung (23) aus mehreren aktiven Oberflächen besteht.

7. Wetterstation (ST) nach einem der vorherigen Ansprüche, **dadurch gekennzeichnet, dass** die Sensoren für vertikale Sonnenstrahlung (23) acht an der Zahl sind und regelmäßig über die Leiterplatte (22) verteilt sind.

8. Wetterstation (ST) nach einem der vorherigen Ansprüche, **dadurch gekennzeichnet, dass** die Leiterplatte (22) scheibenförmig ist.

9. Wetterstation (ST) nach einem der vorherigen Ansprüche, **dadurch gekennzeichnet, dass** sie einen hohlen Fuß (40) umfasst, der das obere Gehäuse (30) trägt und einen Kanal (44) für ein elektrisches Kabel (45) zur Versorgung von Komponenten integriert, die von der Leiterplatte (22) getragen werden.

10. Wetterstation (ST) nach einem der vorherigen Ansprüche, **dadurch gekennzeichnet, dass** sie eine Ausrichtungsvorrichtung umfasst, wie z. B. einen Kompass oder eine Skala.

11. Wetterstation (ST) nach einem der vorherigen Ansprüche, **dadurch gekennzeichnet, dass** sie Hardware- und Softwareeinrichtungen umfasst, die angepasst sind, um die von einem oder mehreren Sensoren bereitgestellten Informationen abzurufen und einen Wert für vertikale Strahlung für eine gegebene Ausrichtung bereitzustellen, die einer Fassade (F) des Gebäudes entspricht.

12. Anlage (INST) zur automatisierten Steuerung von Komfort- und/oder Sicherheitsbedingungen in einem Gebäude (B), die Anlage umfassend ein Netzwerk (NTW) und elektrische Geräte (EE), die Bereiche (Z) oder Fassaden (F) des Gebäudes (B) ausstatten und mit dem Netzwerk (NTW) verbunden sind, **dadurch gekennzeichnet, dass** sie eine Wetterstation (ST) nach einem der vorherigen Ansprüche umfasst, die auf einem Dach des Gebäudes (B) installiert ist, mit dem Netzwerk (NTW) verbunden ist und in der Lage ist, einen vertikalen Strahlungswert zu bestimmen, der Ausrichtung mindestens einer Fassade (F) des Gebäudes entspricht.

13. Verfahren zum Konfigurieren einer Wetterstation (ST) nach einem der Ansprüche 1 bis 9, umfassend mindestens einen Schritt zum Bestimmen der Ausrichtung der Wetterstation (ST) und einen Schritt zum Zuordnen eines oder mehrerer Sensoren (23, 24) zu einer gegebenen Ausrichtung.

14. Verfahren zur Konfiguration einer Wetterstation (ST) nach dem vorherigen Anspruch, **dadurch gekennzeichnet, dass** es einen Schritt zur Parametrisierung einer oder mehrerer Eigenschaften der Sensoren (23, 24) umfasst.

## Claims

1. A weather station (ST) to be installed on the roof of a building (B), which building comprises an installation (INST) for automated control of the comfort and/or safety conditions in the building, the station comprising:
- an upper housing (30) with an at least partially translucent cover (32);
- a printed circuit board (22) extending in a plane (P) under the translucent cover;
- a plurality of vertical solar radiation sensors (23), said vertical solar radiation being the power received per unit of area on a vertical surface and said vertical solar radiation sensors being distributed over a surface (22T) of the printed circuit board (22) facing the cover (32),
the various vertical solar radiation sensors (23) each comprising an active surface (23A) facing a discrete direction (D23), called the normal direction of radiation, each normal direction of radiation being normal to an axis (V) perpendicular to the plane (P) of the printed circuit board (22),
the weather station (ST) being **characterised**
- **in that** it comprises a plurality of vertical illumination sensors (24) distributed on the outer edge (22E) of the surface (22T) of the printed circuit board (22) facing the cover (32),
- **in that** the various vertical illumination sensors (24) each comprise an active surface (24A) facing a discrete direction (D24), known as the normal direction of illumination, each normal direction of illumination being normal to the axis (V) perpendicular to the plane (P) of the printed circuit board (22), and
- **in that** the vertical solar radiation sensors (23) and the vertical illumination sensors (24) are combined, either by being integrated into electronic components (27), a vertical solar radiation sensor (23) and a vertical illumination sensor (24) being integrated as a pair of sensors in the same electronic component (27), or by being arranged in pairs (P) on the printed circuit board (22).

2. The weather station (ST) according to claim 1, **characterised in that** it comprises a global radiation sensor (25) positioned at the centre (22C) of the printed circuit board (22).

3. The weather station (ST) according to claim 2, **characterised in that** the global radiation sensor (25) is positioned at a light guide (34) supported by the cover (32) of the upper housing (30).

4. The weather station according to any of the preceding claims, **characterised in that** the upper housing (30) incorporates a rain sensor (28).

5. The weather station (ST) according to the preceding claim, **characterised in that** the discrete normal directions of radiation (D23) and the discrete normal directions of illumination (D24) are angularly offset from each other about the axis (V) perpendicular to the plane (P) of the printed circuit board (22).

6. The weather station (ST) according to one of the preceding claims, **characterised in that** each vertical solar radiation sensor (23) is composed of several active surfaces.

7. The weather station (ST) according to one of the preceding claims, **characterised in that** the vertical solar radiation sensors (23) are eight in number and are regularly distributed on the printed circuit board (22).

8. The weather station (ST) according to one of the preceding claims, **characterised in that** the printed circuit board (22) is disc-shaped.

9. The weather station (ST) according to one of the preceding claims, **characterised in that** it comprises a hollow base (40), supporting the upper casing (30) and incorporating a conduit (44) for an electrical cable (45) for supplying components supported by the printed circuit board (22).

10. The weather station (ST) according to one of the preceding claims, **characterised in that** it comprises an orientation device, such as a compass or a scale.

11. The weather station (ST) according to one of the preceding claims, **characterised in that** it comprises hardware and software means adapted to recover the information supplied by one or more sensors and to supply a vertical radiation value for a given orientation corresponding to a façade (F) of the building.

12. An installation (INST) for the automated control of comfort and/or safety conditions in a building (B), the installation comprising a network (NTW) and electrical equipment (EE) equipping zones (Z) or façades (F) of the building (B) and connected to the network (NTW) **characterised in that** it comprises a weather station (ST) according to one of the preceding claims, installed on a roof of the building (B), connected to the network (NTW) and capable of determining a vertical radiation value corresponding to the orientation of at least one façade (F) of the building.

13. A method of configuring a weather station (ST) according to any of claims 1 to 9, comprising at least one step of determining the orientation of the weather station (ST) and a step of assigning one or more sensors (23, 24) to a given orientation.

14. A method of configuring a weather station (ST) according to the preceding claim, **characterised in that** it comprises a step of setting one or more characteristics of the sensors (23, 24).
